# NEW EUROPEAN PATENT SPECIFICATION

(11) **EP 1 809 051 B2**
(45) Date of publication and mention of the opposition decision: **31.10.2012**
(45) Mention of the grant of the patent: 28.10.2009
(21) Application number: 05820677.2
(22) Date of filing: 21.12.2005
(51) Int. Cl.: H04W 4/24

(54) **A CALL CONTROLLING METHOD AND SYSTEM, BUSINESS OPERATION SUPPORTING SYSTEM AND SERVICE CONTROLLING POINT**
ANRUFSTEUERUNGSVERFAHREN UND SYSTEM, UNTERSTÜTZUNGSSYSTEM FÜR GESCHÄFTSBETRIEB UND DIENSTLEISTUNGSSTEUERUNGSPUNKT
PROCEDE ET SYSTEME DE COMMANDE D'APPEL, SYSTEME SUPPORT D'OPERATIONS COMMERCIALES ET POINT DE COMMANDE DE SERVICES

(30) Priority: 21.12.2004 CN 200410101603
(43) Date of publication of application: 18.07.2007
(73) Proprietor: Huawei Technologies Co., Ltd., Longgang District, Shenzhen Guangdong 518129 (CN)
(72) Inventor: YAO, Bingbing Huawei Administration Building, Shenzhen, Guangdong 518129 (CN)
(74) Representative: Pfenning, Meinig & Partner GbR
(86) International application number: PCT/CN2005/002272
(87) International publication number: WO 2006/066508

(56) References cited:
- WO-A-99/30480
- CN-A- 1 464 662
- US-A- 6 029 062
- US-A1- 2003 069 840
- US-A1- 2003 158 812
- US-A1- 2004 151 292
- US-B1- 6 311 275

## Description

### Field of the Invention

The present invention relates to the mobile communications technology, and more particularly, to a method and system for call control, and a Service Control Point (SCP), a Business Operation Supporting System (BOSS).

### Background of the Invention

Along with the continuous development of the mobile communication technology, the communications between people become more and more rapid and convenient, and the number of mobile subscribers is increasing rapidly. For telecommunication developers and operators, how to determine the charging mode of various developed services has become an important issue of concern. These days, the pre-paid and post-paid charging modes are generally used in the developed mobile services.

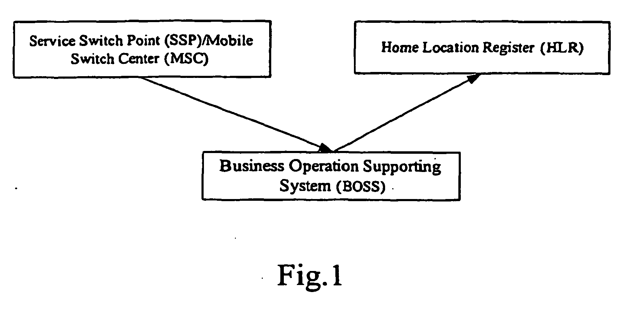

For the post-paid mode, charging is performed based on a BOSS which is also called billing system. Fig.1 shows a schematic diagram of charging in the post-paid mode and call control in accordance with the prior arts. As shown in Fig.1, when the post-paid mode is adopted for charging, the post-paid subscriber may use a communication service before charging. Upon finishing a communication service, an exchange device such as a Mobile Switch Center (MSC)/Service Switch Point (SSP) may acquire the call duration, generate a call bill according to the call duration and send the call bill to the BOSS. The BOSS performs a charging process on the subscriber according to the received call bill.

In a post-paid service, as a subscriber can use the service before charging, such problems as excessive arrears and vicious arrears of a subscriber may emerge sometimes. To avoid the problems of excessive arrears and vicious arrears of a post-paid service subscriber, the solution to such problems in the prior arts is as shown in Fig.1: The BOSS, according to the charging operations made by the BOSS itself on the subscriber, instructs a Home Location Register (HLR) to change the service attribute of the subscriber and stop the relevant voice service, data service and value-added service for the subscriber so as to implement the call control of the post-paid service subscriber, thereby avoid the problems of excessive arrears and vicious arrears by the subscriber.

However, in the prior arts, the BOSS can perform the charging process when a communication service is finished, and then stop the relevant services of the subscriber through the HLR according to the charging result. It is impossible, however, to timely control the call procedure of a subscriber through charging processing when a call is set up or during a call, and thus impossible to avoid the problems of excessive arrears and vicious arrears of the subscriber, thereby the benefits of the operators are harmed.

US 2003/0158812, discloses a centralized communications network charging method and apparatus. In the US patent, the centralized billing is provided by processing requests for pre-paid and post-paid service at a SCP configured to prepare one or more associated event records. And the event records associated with provided services can be stored at the SCP or in a remote database, or the SCP directs the event records to a central billing system configured to bill subscriber directly or to transmit event records to one or more payment system via a financial gateway.

US 2003/0069840, discloses a prepaid/postpaid reconfiguration logic module in the SCP of a wireless network. The prepaid/postpaid reconfiguration logic module allows the subscriber to a prepaid wireless service to change payment options between prepaid and postpaid without requiring assistance from a customer care representative. Standard wireless intelligent network messaging is used to change from a previous selected prepaid or postpaid payment option, allowing the new option to be applied to their wireless phone account before or after any or all usages.

US 2004/0151292, discloses a platform between a subscriber and a telephony switch. The platform receives indications of calls placed to and by a subscriber and identifies a service type of each of the calls. The platform validates the subscriber as an active customer based on automatic number identification. The platform determines if the subscriber is eligible to receive or place a call, and/or employ calling features, by looking up in a local platform database an account status of the customer.

DE 10004742 A1 discloses a method for the setup and charge-related billing of a telecommunication connection from a telecommunication line unit of a communication network to a target telecommunication network. A charge unit 15 queried the amount of the charge credit prior to sending the connection message CON proceeding from the service control point SCP, and the telecommunication connection duration that is maximally possible with the charge credit is determined on the basis of the charge rate to be applied. The SCP sends this maximally possible telecommunication connection duration to the service switching point SSP via a rate message AC (Apply Charging).

EP 1296264 A2 discloses an IN-system centric solution for repaid and postpaid convergent online rating. When an IN call is detected, the SSP queries the IN system and the execution of the Universal Rating Service is started by the CAP-event "Initial-DP". The URS service evaluates the destination of the call, checks the subscribers credit and executes the online GSM rating of the voice call, after that the IN system returns the result to the SSP for further call set-up processing (CON, SSP- connects the B-party) and applies the online charging mechanism. In this case the URS service provides the full rating and billing functionality.

### Summary of the Invention

Embodiments of the present invention provide a method and system for call control, and the embodiments of the present invention also provide a BOSS and an SCP to decrease the service load of the SCP and radically avoid problems of excessive arrears and vicious arrears of the subscribers.

The technical proposal of the embodiment of the present invention is implemented by the followings.

A method for call control includes the following processes:
upon receiving a call from a switch system, an SCP sends an authentication request with a subscriber identifier of the call to a BOSS;
the SCP controls the call according to an authentication result upon receiving the authentication result of the BOSS authenticating a subscriber of the call according to the subscriber identifier of the call carried in the authentication request and subscriber information stored;
wherein the process of controlling the call by the SCP according to the authentication result upon receiving the authentication result of the BOSS authenticating a subscriber of the call according to the subscriber identifier of the call carried in the authentication request and subscriber information stored includes:
   the BOSS searches for the subscriber information according to the subscriber identifier, and determines whether a subscriber is allowed to proceed to the call according to the subscriber information;
   if the subscriber is allowed to proceed to the call, the BOSS sends a successful authentication message as a first authentication result to the SCP, and the SCP performs a call connecting processing upon receiving the first authentication result;
   if the subscriber is not allowed to proceed to the call, the BOSS sends a failed authentication message as a second authentication result to the SCP, and the SCP rejects the call upon receiving the second authentication result.

In the method, the subscriber is a post-paid subscriber, the process of determining by the BOSS whether a subscriber is allowed to proceed to the call according to the subscriber information includes:
the BOSS determines whether the subscriber is allowed to proceed to the call according to a payment record of the subscriber in the subscriber information.

In the method, the subscriber is a pre-paid subscriber, and the method further includes:
store information of pre-paid subscribers including the subscriber identifier and balance of the subscribers in the BOSS;
the process of BOSS determining whether the subscriber is allowed to proceed to the call according to the subscriber information includes:
   the BOSS determines whether the subscriber is allowed to proceed to the call according to the balance in the subscriber information.

In the method, before the BOSS sends the first authentication result to the SCP, the method further includes:
the BOSS generates an allowed call duration according to the subscriber information, the allowed call duration is carried in the first authentication result.

The method further includes:
the SCP sends the duration of the call to the BOSS upon monitoring that a duration of the call reaches the allowed call duration;
the BOSS calculates a fee according to the duration of the call;
the BOSS determines whether the subscriber is allowed to continue the call according to the fee;
if the subscriber is allowed to continue the call, the BOSS generates a currently allowed call duration and sending the currently allowed call duration to the SCP, and monitors the duration of the call by the SCP;
if the subscriber is not allowed to continue communications, the BOSS sends a call-release instruction to the SCP, sends the call-release instruction to the switch system by the SCP, and releases the call.

In the method, the subscriber is the post-paid subscriber, and the process of BOSS determining whether the subscriber is allowed to continue the call according to the fee includes:
the BOSS determines whether the subscriber is allowed to continue the call according to the payment record of the subscriber and the fee.

In the method, the subscriber is the pre-paid subscriber, and the process of BOSS determining whether the subscriber is allowed to continue the call according to the fee comprises:
the BOSS acquires the balance of the subscriber according to the fee, and determines whether the subscriber is allowed to continue the call according to the balance of the subscriber.

The method further includes:
when releasing the call, the BOSS generates a bill of the call according to duration information and charging information in the call.

In the method, a bottom layer communication protocol for interaction between the SCP and the BOSS is Transmission Control Protocol (TCP)/Internet Protocol (IP).

In the method, an application layer protocol for interaction between the SCP and the BOSS is a user-defined protocol or an existing application protocol.

A system for call control includes:
an SCP being arranged to receive a call from a switch system, and to send out an authentication request with a subscriber identifier of the call, and to receive an authentication result and to control the call according to the authentication result; and
a BOSS being arranged to receive the authentication request from the SCP, to authenticate a subscriber of the call according to a subscriber identifier of the call carried in the authentication request and subscriber information stored, and to send out the authentication result to the SCP,
wherein the BOSS is arranged to search for the subscriber information according to the subscriber identifier, and to determine whether the subscriber is allowed to proceed to the call according to the subscriber information;
wherein the BOSS is configured to send a successful authentication message as a first authentication result to the SCP in case that the subscriber is allowed to proceed to the call, and the SCP is configured to perform a call connecting processing upon receiving the first authentication result in case the subscriber being allowed to proceed to the call;
wherein the BOSS is configured to send a failed authentication message as a second authentication result to the SCP in case that the subscriber is not allowed to proceed to the call, and the SCP is configured to reject the call upon receiving the second authentication result in case that the subscriber is not allowed to proceed to the call.

The system further includes a real-time call bill generating apparatus which is configured to creates a call bill of the call in response to receive call duration information and charging information in the call from the BOSS;
and the BOSS is further configured to send call duration information and charging information to the real-time call bill generating apparatus when releasing the call.

In the system, the real-time call bill generating apparatus is located in the BOSS.

An SCP includes: a real-time call control unit being arranged to receive call information from a switch system, to send an authentication request carrying a subscriber identifier of a call to a Business Operation Supporting System (BOSS), to receive an authentication result sent by the BOSS and to controll the call according to the authentication result;
a real-time interaction unit being arranged to forward the authentication request and the authentication result between the BOSS and the real-time call control unit;
wherein the real-time call control unit is arranged to determine whether the authentication result is a successful authentication message or a failed authentication message;
wherein the real-time call control unit is configured to perform a call connecting processing in case that the authentication result is the successful authentication message; and
wherein the real-time call control unit in the SCP is configured to reject the call and to terminate the procedure in case that the authentication result is the failed authentication message.

A BOSS includes: a unit being arranged to receive an authentication request carrying a subscriber identifier of a call sent by an SCP; a unit being arranged to store the subscriber information; an authenticating and charging unit, is arranged to perform an authentication on the call according to the subscriber identifier of the call carried in the authentication request and subscriber information stored; a unit being arranged to send an authentication result to the SCP;
wherein the authenticating and charging unit is arranged to search for the subscriber information according to the subscriber identifier, and to determine whether a subscriber is allowed to proceed to the call according to the subscriber information,
wherein the authenticating and charging unit is configured to send a successful authentication message as the authentication result to a real-time interaction unit in the SCP in case the subscriber is allowed to proceed to call;
wherein the authenticating and charging unit is configured to send a failed authentication message as the authentication result to the real-time interaction unit in the SCP in case that the subscriber is not allowed to proceed to the call.

The BOSS further includes: a real-time call bill generating unit being arranged to create a call bill of the call in response to receiving call duration information and charging information in the call from the authenticating and charging unit;
the authenticating and charging unit is further configured to send the call duration information and charging information to the real-time call bill generating unit when releasing the call.

In view of the above, according to the embodiment of the present invention, the ability of providing real-time call control of the SCP and the ability of providing charging evaluation of the BOSS are employed. Both the SCP and the BOSS are used for charging. In a call procedure of a post-paid subscriber, the SCP and the BOSS timely perform the charging evaluation on the subscriber according to the payment records of the subscriber and control the calls according to the charging evaluation result, thereby radically avoiding problems of excessive arrears and vicious arrears of the subscriber and protecting the benefits of the operators.

In addition, according to the embodiment of the present invention, various information of pre-paid subscriber is pre-stored in the BOSS. Both the SCP and the BOSS are also used for charging evaluation and control. Therefore, the pre-paid subscribers can enjoy the care and services provided by the BOSS and thus the SCP needs not to perform the charging process, thereby decreasing the service load of the SCP.

### Brief Description of the Drawings

Fig.1 is a schematic diagram illustrating charging in the post-paid mode and call control in accordance with the prior arts.
Fig.2 is a schematic diagram of a basic structure of the system according to an embodiment of the present invention.
Fig.3 is a schematic diagram of a preferred structure of the system according to an embodiment of the present invention.
Fig.4 is a flowchart of an embodiment of the present invention.
Fig.5 is a flowchart illustrating an authenticating and charging unit in the BOSS performing authentication and obtaining an authentication result according to an embodiment of the present invention.

### Detailed Description of the Invention

In the prior arts, when the post-paid mode is adopted, the charging is performed by the BOSS according to the call bill after a service is finished. According to the charging result, the subsequent call control is performed, and thus the problems of excessive arrears and vicious arrears of a subscriber can not be effectively avoided. To solve these problems, a real-time control, that is, a charging evaluation and a call control based on the charging result must be performed in the call procedure of the subscriber, rather than a control after the end of the call, thereby radically avoiding problems of excessive arrears and vicious arrears of the subscriber. As the SCP can provide the real-time call control, and the BOSS can provide the charging evaluation in the case of a post-paid service, the SCP and the BOSS may be used together for the call control. Considering the characteristic, a method for call control is put forward by the present invention, which includes the following processes: an SSP or an MSC receives a call, and triggers the call at a SCP; the SCP sends an authentication request carrying a subscriber identifier of this call to a BOSS; the BOSS performs the authentication on the subscriber of the call according to the subscriber identifier and the subscriber information stored in the BOSS, and sends an authentication result to the SCP; the SCP controls the call according to the authentication result.

The call may be initiated either by a pre-paid subscriber or by a post-paid subscriber, that is, the embodiments of the present invention may be applied either to call control of a pre-paid subscriber or to call control of a post-paid subscriber. In case of the call control of a pre-paid subscriber, various information of the subscriber is added in the existing BOSS in advance in accordance with an embodiment of the present invention.

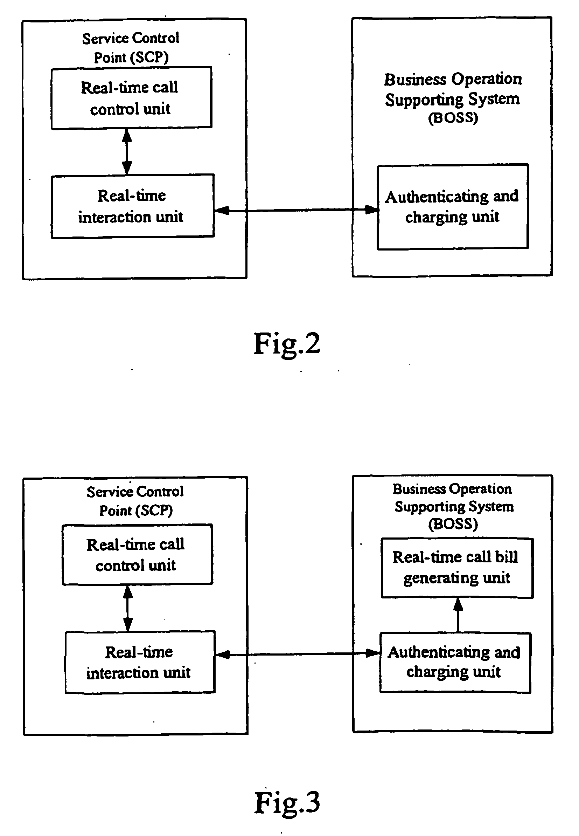

Fig.2 shows the basic structure of a system for call control according to an embodiment of the present invention. As shown in Fig.2, the embodiment of the present invention accordingly proposes a system. The system includes an SCP and a BOSS, in which the SCP further includes a real-time call control unit and a real-time interaction unit and the BOSS further includes an authenticating and charging unit.

The real-time interaction unit, on one hand, receives an authentication request carrying a subscriber identifier of a call sent by the real-time call control unit, and sends the authentication request carrying the subscriber identifier of the call to the authenticating and charging unit in the BOSS. On the other hand, the real-time interaction unit receives an authentication result sent by the authenticating and charging unit in the BOSS and sends the authentication result to the real-time call control unit in the SCP.

The real-time call control unit, on one hand, receives call information submitted by a switch system and sends the authentication request carrying the subscriber identifier of the call to the real-time interaction unit in the SCP. And the SSP or the MSC is an example of the switch system, in the following description the SSP or the MSC refers to the switch system. On the other hand, the real-time call control unit receives the authentication result sent by the real-time interaction unit and controls the call according to the authentication result.

The authenticating and charging unit receives the authentication request carrying the subscriber identifier of the call sent by the real-time interaction unit in the SCP, performs an authentication on this call according to the subscriber identifier of the call carried in the authentication request and the subscriber information stored in the authenticating and charging unit, and sends the authentication result to the real-time interaction unit in the SCP.

Fig.3 shows a preferred structure of the system according to an embodiment of the present invention. As shown in Fig.3, in order to timely indicate the service duration and charging information of the subscriber in a call, preferably, a real-time call bill generating unit may be further included in the BOSS. The authenticating and charging unit in the BOSS is further used for sending the service duration and the charging information in the call to the real-time call bill generating unit when the call is finished. The real-time call bill generating unit is used to create the call bill of the call timely when it receives the service duration and charging information in the call.

To make the objectives, technical solution and advantages of the present invention more apparent, the embodiment of the present invention will be described in detail with reference to the accompanying drawings and embodiments.

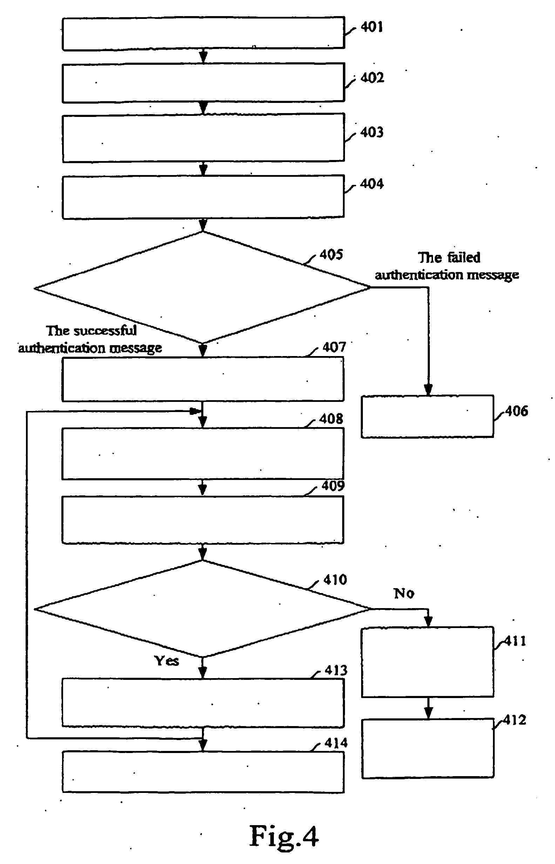

Fig.4 shows a flowchart of an embodiment of the present invention. As shown in Fig.2 and 4, by using the system of the embodiment of the present invention, the method for call control in accordance with the embodiment of the present invention includes the following processes:
Step 401: a calling subscriber initiates a call. An MSC/SSP receives a call and triggers the call to an SCP.

In this process, upon receiving the call, the MSC/SSP directly triggers the call to the SCP regardless of whether the subscriber initiating the call is a pre-paid subscriber or a post-paid subscriber. In this way, it is ensured that the SCP may be used to perform a real-time call control on the call in the subsequent procedures either for a pre-paid subscriber or for a post-paid subscriber.

Step 402: a real-time call control unit of the SCP receives the call, carries subscriber information of the call in an authentication request and sends the authentication request to the real-time interaction unit of the SCP. The real-time interaction unit sends the received authentication request carrying the subscriber information of this call to an authenticating and charging unit of the BOSS.

The subscriber information of this call carried in the authentication request mentioned here and hereafter includes such information as the subscriber identifier of the call and etc.

In this process, after the call is triggered to the SCP, the SCP sends the authentication request to the BOSS so that the BOSS could perform a real-time charging evaluation on this call in the subsequent procedures.

Step 403: the authenticating and charging unit of the BOSS receives the authentication request carrying the subscriber information of this call, authenticates the subscriber according to the subscriber information of this call carried in the authentication request and the subscriber information stored in the authenticating and charging unit, and sends an authentication result to the real-time interaction unit in the SCP.

Here, for a post-paid subscriber, the BOSS stored the subscriber information for authentication in itself, such as the identifier, the balance information and the payment record information of the post-paid subscriber. For a pre-paid subscriber, according to the embodiment of the present invention, the pre-paid subscriber information such as the identifier, the balance information and the payment record information of the pre-paid subscriber are pre-stored in the BOSS. In this way, in this process, the BOSS can perform an authentication process either in the case of a post-paid subscriber or in the case of a pre-paid subscriber.

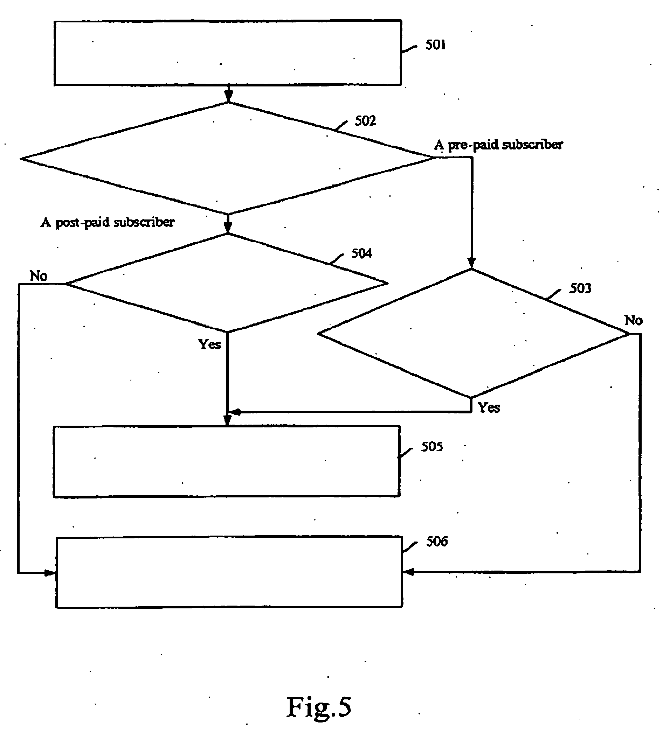

Fig.5 shows a flowchart of performing an authentication and obtaining an authentication result by the authenticating and charging unit in the BOSS according to an embodiment of the invention. As shown in Fig.5, the detailed implementation procedures of the above Step 403 include the following processes:
Step 501: an authenticating and charging unit in the BOSS searches, from the various subscriber information stored in the authenticating and charging unit, for subscriber information which includes the subscriber identifier carried in the authentication request.
Step 502: the authenticating and charging unit in the BOSS determines whether the subscriber initiating the call is a pre-paid subscriber or a post-paid subscriber according to the found subscriber information. If the subscriber is a pre-paid subscriber, proceed to Step 503. If the subscriber is a post-paid subscriber, proceed to Step 504.
Step 503: the authenticating and charging unit in the BOSS determines whether the subscriber initiating this call is allowed to call according to the balance information of this subscriber. If the subscriber is allowed to call, proceed to Step 505; otherwise, proceed to Step 506.
Step 504: the authenticating and charging unit in the BOSS determines whether the subscriber initiating the call is allowed to call according to a payment record of this subscriber. If the subscriber is allowed to call, proceed to Step 505; otherwise, proceed to Step 506.

Here, when the payment records of this subscriber indicate that this subscriber is able to pay the bill and/or has a few arrears, this subscriber is regarded to be allowed to call. If the payment records of this subscriber indicate that this subscriber has excessive arrears and/or is unable to pay the bill, this subscriber is regarded not to be allowed to call.

In the above Steps 503 and 504, both the balance information and the payment records of this subscriber are included in the subscriber information stored in the BOSS, thus the authenticating and charging unit in the BOSS can determine whether the subscriber initiating the call is allowed to call.

Step 505: the authenticating and charging unit in the BOSS sends a successful authentication message as the authentication result to a real-time interaction unit in the SCP and terminates the flow.

Step 506: the authenticating and charging unit in the BOSS sends a failed authentication message as the authentication result to the real-time interaction unit in the SCP.

By now, the process of performing the authentication procedure and generating the authentication result by the authenticating and charging unit in the BOSS is implemented.

It should be noted that, in the process shown in Fig.5, when the authenticating and charging unit in the BOSS regards the successful authentication message as the authentication result, it generates the allowed call duration of the call for the subscriber according to the balance information (with respect to the pre-paid subscriber) or the payment records (with respect to the post-paid subscriber) of the subscriber, and carries the allowed call duration of the call in the successful authentication message sent to the real-time interaction unit in the SCP.

Step 404: the real-time interaction unit in the SCP receives the authentication result and sends the authentication result to the real-time call control unit in the SCP.

Step 405: the real-time call control unit in the SCP determines whether the authentication result is the successful authentication message or the failed authentication message. If the authentication result is the successful authentication message, proceed to Step 407. If the authentication result is the failed authentication message, proceed to Step 406.

Step 406: the real-time call control unit in the SCP rejects the call and terminates the procedure.

Step 407: the real-time call control unit in the SCP performs a call connecting processing and thus the calling subscriber and the called subscriber can communicate with each other.

By now, the process of controlling the setting up of the subscriber's call according to the balance information or the payment records by the BOSS and the SCP is implemented, and the problems of excessive arrears and vicious arrears of the subscriber may be avoided.

During the call, according to the embodiment of the present invention, the BOSS and the SCP may further control the course of the call by performing the subsequent procedures in Fig.4 according to the balance information or the payment records and the call duration to prevent the problems of excessive arrears and vicious arrears of the subscribers.

During the communication between the calling subscriber and the called subscriber, the SSP/MSC periodically submits the call duration to the SCP.

Step 408: the real-time call control unit in the SCP timely monitors the call, and when the duration of the call has reached the allowed call duration of the call, sends the duration information of the call to the real-time interaction unit in the SCP.

Step 409: the real-time interaction unit in the SCP sends the duration information of the call to the authenticating and charging unit in the BOSS. The authenticating and charging unit in the BOSS receives the duration information of the call and calculates the fee corresponding to the call duration.

Step 410: the authenticating and charging unit in the BOSS determines whether the subscriber is allowed to continue the communication according to the calculated fee. If the subscriber is allowed to continue the communication, proceed to Step 413; otherwise, proceed to Step 411.

Here, if the subscriber of the call is a pre-paid subscriber, in this process, the authenticating and charging unit in the BOSS acquires the balance information of the current subscriber according to the calculated fee, and decides whether the current subscriber is allowed to continue the communications according to the balance of the current subscriber. If the subscriber of the call is a post-paid subscriber, in this process, the authenticating and charging unit in the BOSS decides whether the current subscriber is allowed to continue the communications according to the payment records and the calculated fee of the current subscriber i.e. the fee in this service.

Step 411: the authenticating and charging unit in the BOSS sends a call-release instruction to the real-time interaction unit in the SCP, and the real-time interaction unit sends the call-release instruction to the real-time call control unit in the SCP.

Step 412: the real-time call control unit in the SCP triggers a processing for deleting the current call. The BOSS, SCP as well as the SSP or the MSC perform the processing of releasing the current call, and the flow is terminated.

Step 413: the authenticating and charging unit in the BOSS generates an allowed call duration of the current call, and sends the allowed call duration of the current call to the real-time interaction unit in the SCP.

Here, if the subscriber of the call is a pre-paid subscriber, in this process, the authenticating and charging unit in the BOSS generates the allowed call duration of the current call according to the balance of the current subscriber. If the subscriber of this call is a post-paid subscriber, in this process, the authenticating and charging unit in the BOSS generates the allowed call duration of the current call according to the payment records of the subscriber and the calculated fee.

Step 414: the real-time interaction unit in the SCP sends the received allowed call duration of the current call to the real-time call control unit in the SCP, and Step 408 is repeated.

It should be noted that, when the real-time call control unit in the SCP timely monitors the call, if it receives a call-release request sent by the current subscriber through the SSP/MSC, it sends the call-release request carrying the duration of the call to the real-time interaction unit in the SCP. The real-time interaction unit in the SCP then sends the call-release request carrying the duration of the call to the BOSS. In this way, the BOSS, the SCP, and the SSP or the MSC perform the process of releasing the current call. In addition, as shown in Fig.3, upon performing the process of releasing the current call by the BOSS, the authenticating and charging unit in the BOSS sends the duration information and the charging information in this call to the real-time call bill generating unit in the BOSS. The real-time call bill generating unit timely creates a call bill for the call when it receives the duration information and the charging information in the call sent by the authenticating and charging unit.

In the embodiment of the present invention, the subscriber of the call may be a calling subscriber and/or a called subscriber.

In view of the above, an interface for timely interacting various information is added between the real-time interaction unit in the SCP and the authenticating and charging unit in the BOSS. The TCP/IP may be used as the bottom layer communication protocols of the interface. Moreover, the application protocols of the interface for timely interacting various information between the real-time interaction unit and the authenticating and charging unit may adopt the existing protocols or the user-defined protocols. When an existing protocol is used, the application protocol may be exemplified by a Unified Accounting Service Protocol (UASP), and the concrete implementation may be exemplified by the following: redefining an UASP interface, wherein the message format supported by the redefined UASP interface may be defined according to the message format of the existing UASP interface, such as A interface or C interface etc., or adding various messages relevant to the embodiment of the present invention in the existing UASP interface such as T interface.

The foregoing is preferred embodiments of this invention, and is not intended to limit the present invention. The invention is to cover all the modifications, variations within the scope of the disclosure as defined by the appended claims.

## Claims

1. A method for call control, comprising:
upon receiving a call from a switch system, sending, by a Service Control Point SCP, an authentication request with a subscriber identifier of the call to a Business Operation Supporting System BOSS(401, 402);
controlling, by the SCP, the call according to an authentication result upon receiving the authentication result of the BOSS authenticating a subscriber of the call according to the subscriber identifier of the call carried in the authentication request and subscriber information stored (403-414);
wherein the process of controlling by the SCP the call according to the authentication result upon receiving the authentication result of the BOSS authenticating a subscriber of the call according to the subscriber identifier of the call carried in the authentication request and subscriber information stored comprises:
searching, by the BOSS, for the subscriber information according to the subscriber identifier, and determining whether a subscriber is allowed to proceed to the call according to the subscriber information (501);
if the subscriber is allowed to proceed to the call, sending by the BOSS a successful authentication message as a first authentication result to the SCP, performing by the SCP a call connecting processing upon receiving the first authentication result (505);
if the subscriber is not allowed to proceed to the call, sending by the BOSS a failed authentication message as a second authentication result to the SCP, and rejecting by the SCP the call upon receiving the second authentication result (506).

2. A method according to claim 1, wherein:
the subscriber is a post-paid subscriber;
the process of determining by the BOSS whether a subscriber is allowed to proceed to the call according to the subscriber information comprises:
determining, by the BOSS, whether the subscriber is allowed to proceed to the call according to a payment record of the subscriber in the subscriber information (504).

3. A method according to claim 1, wherein:
the subscriber is a pre-paid subscriber;
the method further comprises:
storing information of pre-paid subscribers including the subscriber identifier and balance of the subscribers in the BOSS;
the process of determining by the BOSS whether the subscriber is allowed to proceed to the call according to the subscriber information comprises:
determining, by the BOSS, whether the subscriber is allowed to proceed to the call according to the balance in the subscriber information(503).

4. A method according to claim 1, further comprising:
before the BOSS sending the first authentication result to the SCP, generating by the BOSS an allowed call duration according to the subscriber information, and carrying the allowed call duration in the first authentication result (413).

5. A method according to claim 4, further comprising:
sending, by the SCP, the duration of the call to the BOSS upon monitoring that a duration of the call reaches the allowed call duration(414);
calculating, by the BOSS, a fee according to the duration of the call;
determining, by the BOSS, whether the subscriber is allowed to continue the call according to the fee (503);
if the subscriber is allowed to continue the call, generating by the BOSS a currently allowed call duration and sending the currently allowed call duration to the SCP, and monitoring the duration of the call by the SCP (505);
if the subscriber is not allowed to continue communications, sending by the BOSS a call-release instruction to the SCP, sending the call-release instruction to the switch system by the SCP, and releasing the call (506).

6. method according to claim 5, wherein:
the subscriber is a post-paid subscriber;
the process of determining by the BOSS whether the subscriber is allowed to continue the call according to the fee comprises:
determining, by the BOSS, whether the subscriber is allowed to continue the call according to the payment record of the subscriber and the fee (504).

7. A method according to claim 5, wherein:
the subscriber is a pre-paid subscriber;
the process of determining by the BOSS whether the subscriber is allowed to continue the call according to the fee comprises:
acquiring, by the BOSS, the balance of the subscriber according to the fee, and determining whether the subscriber is allowed to continue the call according to the balance of the subscriber (503).

8. A method according to claim 5, further comprising:
when releasing the call, generating by the BOSS a bill of the call according to duration information and charging information in the call.

9. A method according to claim 1, wherein a bottom layer communication protocol for interaction between the SCP and the BOSS is Transmission Control Protocol, TCP/Internet Protocol, IP.

10. A method according to claim 1, wherein an application layer protocol for interaction between the SCP and the BOSS is a user-defined protocol or an existing application protocol.

11. A system for call control, comprising a Service Control Point, SCP,
**characterized by**
the SCP being arranged to receive a call from a switch system and to send out an authentication request with a subscriber identifier of the call (401, 402), and to receive an authentication result and to control the call according to the authentication result; and
a Business Operation Supporting System, BOSS, being arranged to receive the authentication request from the SCP, to authenticate a subscriber of the call according to a subscriber identifier of the call carried in the authentication request and subscriber information stored, and to send out the authentication result to the SCP (403),
wherein the BOSS is arranged to search for the subscriber information according to the subscriber identifier, and to determine whether the subscriber is allowed to proceed to the call according to the subscriber information (501),
wherein the BOSS is configured to send a successful authentication message as a first authentication result to the SCP in case that the subscriber is allowed to proceed to the call, and the SCP is configured to perform a call connecting processing upon receiving the first authentication result (505) in case that the subscriber is allowed to proceed to the call, and
wherein the BOSS is configured to send a failed authentication message as a second authentication result to the SCP in case that the subscriber is not allowed to proceed to the call, and the SCP is configured to reject the call upon receiving the second authentication result in case that the subscriber is not allowed to proceed to the call (506).

12. A system according to claim 11, further comprising:
a real-time call bill generating apparatus, arranged to create a call bill of the call in response to receiving call duration information and charging information in the call from the BOSS;
wherein the BOSS is further configured to send call duration information and charging information to the real-time call bill generating apparatus when releasing the call (414).

13. A system according to claim 12, wherein the real-time call bill generating apparatus is located in the BOSS.

14. A Service Control Point, SCP, comprising:
a real-time call control unit being arranged to receive call information from a switch system,
**characterized by**
the real-time call control unit being arranged to send an authentication request carrying a subscriber identifier of a call to a Business Operation Supporting System (BOSS) (401, 402), to receive an authentication result sent by the BOSS and to control the call according to the authentication result (403); and
a real-time interaction unit being arranged to forward the authentication request and the authentication result between the BOSS and the real-time call control unit (404),
wherein the real-time call control unit is arranged to determine whether the authentication result is a successful authentication message or a failed authentication message (405),
wherein the real-time call control unit is configured to perform a call connecting processing in case that the authentication result is the successful authentication message (407), and
wherein the real-time call control unit in the SCP is configured to reject the call and to terminate the procedure in case that the authentication result is the failed authentication message (406).

15. A Business Operation Supporting System, BOSS, comprising:
a unit being arranged to store subscriber information,
**characterized by** further comprising
a unit being arranged to receive an authentication request carrying a subscriber identifier of a call sent by a Service Control Point, SCP;
an authenticating and charging unit being arranged to perform an authentication on the call according to the subscriber identifier of the call carried in the authentication request and subscriber information stored (403); and
a unit being arranged to send an authentication result to the SCP,
wherein the authenticating and charging unit is arranged to search for the subscriber information according to the subscriber identifier, and to determine whether a subscriber is allowed to proceed to the call according to the subscriber information (501),
wherein the authenticating and charging unit is configured to send a successful authentication message as the authentication result to a real-time interaction unit in the SCP in case that the subscriber is allowed to proceed to the call (505), and
wherein the authenticating and charging unit is configured to send a failed authentication message as the authentication result to the real-time interaction unit in the SCP in case that the subscriber is not allowed to proceed to the call (506).

16. A BOSS according to claim 15, further comprising:
a real-time call bill generating unit being arranged to create a call bill of the call in response to receiving call duration information and charging information in the call from the authenticating and charging unit;
wherein the authenticating and charging unit is further configured to send the call duration information and charging information to the real-time call bill generating unit when releasing the call (414).

## Patentansprüche

1. Verfahren für Anrufsteuerung, umfassend:
nach Empfang eines Anrufs von einem Vermittlungssystem Senden durch einen Dienstesteuerungspunkt, SCP, einer Authentifizierungsanforderung mit einem Teilnehmeridentifikator des Anrufs an ein Geschäftsbetrieb-Unterstützungssystem BOSS (401, 402);
Steuerung des Anrufs durch den SCP gemäß einem Authentifizierungsergebnis nach Empfang des Authentifizierungsergebnisses der Authentifizierung eines Teilnehmers des Anrufs durch das BOSS gemäß dem in der Authentifizierungsanforderung getragenen Teilnehmeridentifikator des Anrufs und der gespeicherten Teilnehmerinformation (403-414);
worin der Steuerungsprozess des Anrufs durch den SCP gemäß dem Authentifizierungsergebnis nach Empfang des Authentifizierungsergebnisses der Authentifizierung eines Teilnehmers des Anrufs durch das BOSS gemäß dem in der Authentifizierungsanforderung getragenen Teilnehmeridentifikator des Anrufs und der gespeicherten Teilnehmerinformation Folgendes umfasst:
Suchen nach der Teilnehmerinformation durch das BOSS gemäß dem Teilnehmeridentifikator und Bestimmen, ob einem Teilnehmer gemäß der Teilnehmerinformation erlaubt ist, den Anruf zu beginnen (501);
falls dem Teilnehmer erlaubt ist, den Anruf zu beginnen, Senden durch das BOSS einer erfolgreichen Authentifizierungsnachricht als ein erstes Authentifizierungsergebnis an den SCP, Ausführen eines Anrufverbindungsprozesses durch den SCP nach Empfang des ersten Authentifizierungsergebnisses (505);
falls dem Teilnehmer nicht erlaubt ist, den Anruf zu beginnen, Senden durch das BOSS einer erfolglosen Authentifizierungsnachricht als ein zweites Authentifizierungsergebnis an den SCP und Verweigern des Anrufs durch den SCP nach Empfang des zweiten Authentifizierungsergebnisses (506).

2. Verfahren nach Anspruch 1, worin:
der Teilnehmer ein Postpaid-Teilnehmer ist;
der Prozess des Bestimmens durch das BOSS, ob einem Teilnehmer gemäß der Teilnehmerinformation erlaubt ist, den Anruf zu beginnen, Folgendes umfasst:
Bestimmen durch das BOSS, ob dem Teilnehmer gemäß einem Zahlungsrecord des Teilnehmers in der Teilnehmerinformation erlaubt ist, den Anruf zu beginnen (504).

3. Verfahren nach Anspruch 1, worin:
der Teilnehmer ein Prepaid-Teilnehmer ist;
das Verfahren außerdem Folgendes umfasst:
Speichern von Information über Prepaid-Teilnehmer im BOSS einschließlich des Teilnehmeridentifikators und des Kontostands der Teilnehmer;
den Prozess des Bestimmens durch das BOSS, ob dem Teilnehmer gemäß der Teilnehmerinformation erlaubt ist, mit dem Anruf zu beginnen, wobei der Prozess Folgendes umfasst:
Bestimmen durch das BOSS, ob dem Teilnehmer gemäß dem Kontostand in der Teilnehmerinformation erlaubt ist, mit dem Anruf zu beginnen (503).

4. Verfahren nach Anspruch 1, außerdem umfassend:
bevor das BOSS das erste Authentifizierungsergebnis an den SCP sendet, Erzeugen durch das BOSS einer erlaubten Anrufdauer gemäß der Teilnehmerinformation und Tragen der erlaubten Anrufdauer im ersten Authentifizierungsergebnis (413).

5. Verfahren nach Anspruch 4, außerdem umfassend:
Senden der Dauer des Anrufs durch den SCP an das BOSS, wenn die Überwachung ergibt, dass eine Dauer des Anrufs die erlaubte Anrufdauer erreicht (414);
Berechnen einer Gebühr durch das BOSS gemäß der Dauer des Anrufs;
Bestimmen durch das BOSS, ob dem Teilnehmer gemäß der Gebühr erlaubt ist, den Anruf fortzusetzen (503);
falls dem Teilnehmer erlaubt ist, den Anruf fortzusetzen, Erzeugen durch das BOSS einer gegenwärtig erlaubten Anrufdauer und Senden der gegenwärtig erlaubten Anrufdauer an den SCP und Überwachen der Dauer des Anrufs durch den SCP (505);
falls dem Teilnehmer nicht erlaubt ist, die Kommunikationen fortzusetzen, Senden einer Anrufabbauanweisung durch das BOSS an den SCP, Senden der Anrufabbauanweisung durch den SCP an das Vermittlungssystem und Abbau des Anrufs (506).

6. Verfahren nach Anspruch 5, worin:
der Teilnehmer ein Postpaid-Teilnehmer ist;
der Prozess des Bestimmens durch das BOSS, ob dem Teilnehmer gemäß der Gebühr erlaubt ist, den Anruf fortzusetzen, Folgendes umfasst:
Bestimmen durch das BOSS, ob dem Teilnehmer gemäß dem Zahlungsrecord des Teilnehmers und der Gebühr erlaubt ist, den Anruf fortzusetzen (504).

7. Verfahren nach Anspruch 5, worin:
der Teilnehmer ein Prepaid-Teilnehmer ist;
der Prozess des Bestimmens durch das BOSS, ob dem Teilnehmer gemäß der Gebühr erlaubt ist, den Anruf fortzusetzen, Folgendes umfasst:
Abrufen des Kontostands des Teilnehmers gemäß der Gebühr durch das BOSS und Bestimmen, ob dem Teilnehmer gemäß dem Kontostand des Teilnehmers erlaubt ist, den Anruf fortzusetzen (503).

8. Verfahren nach Anspruch 5, außerdem umfassend:
beim Anrufabbau Erzeugen einer Rechnung für den Anruf durch das BOSS gemäß der Dauerinformation und der Vergebührungsinformation im Anruf.

9. Verfahren nach Anspruch 1, worin ein Kommunikationsprotokoll der untersten Schicht für Wechselwirkung zwischen dem SCP und dem BOSS das Übertragungssteuerungsprotokoll (TCP)/Internetprotokoll (IP) ist.

10. Verfahren nach Anspruch 1, worin ein Anwendungsschichtprotokoll für Wechselwirkung zwischen dem SCP und dem BOSS ein benutzerdefiniertes Protokoll oder ein bestehendes Anwendungsprotokoll ist.

11. System für Anrufsteuerung, umfassend einen Dienstesteuerungspunkt, SCP, **dadurch gekennzeichnet, dass**
der SCP dazu angeordnet ist, dass er einen Anruf von einem Vermittlungssystem empfängt und eine Anthentifizierungsanforderung mit einem Teilnehmeridentifikator des Anrufs aussendet (401, 402) und ein Authentifizierungsergebnis empfängt und den Anruf gemäß dem Authentifizierungsergebnis steuert; und
ein Geschäftsbetrieb-Unterstützungssystem, BOSS, dazu angeordnet ist, dass es die Authentifizierungsanforderung vom SCP empfängt, einen Teilnehmer des Anrufs gemäß einem in der Authentifizierungsanforderung getragenen Teilnehmeridentifikator des Anrufs und gespeicherter Teilnehmerinformation zu authentifizieren und das Authentifizierungsergebnis an den SCP aussendet (403), worin das BOSS dazu angeordnet ist, nach der Teilnehmerinformation gemäß dem Teilnehmeridentifikator zu suchen und zu bestimmen, ob einem Teilnehmer gemäß der Teilnehmerinformation erlaubt ist, den Anruf zu beginnen (501);
worin das BOSS dazu konfiguriert ist, eine erfolgreiche Authentifizierungsnachricht als ein erstes Authentifizierungsergebnis an den SCP zu senden, falls dem Teilnehmer erlaubt ist, den Anruf zu beginnen, und das SCP dazu konfiguriert ist, einen Anrufverbindungsprozess nach Empfang des ersten Authentifizierungsergebnisses auszuführen (505), falls dem Teilnehmer erlaubt ist, den Anruf zu beginnen, und
worin das BOSS dazu konfiguriert ist, eine erfolglose Authentifizierungsnachricht als ein zweites Authentifizierungsergebnis an den SCP zu senden, falls dem Teilnehmer nicht erlaubt ist, den Anruf zu beginnen, und das SCP dazu konfiguriert ist, den Anruf nach Empfang des zweiten Authentifizierungsergebnisses zu verweigern, falls dem Teilnehmer nicht erlaubt ist, den Anruf zu beginnen (506).

12. System nach Anspruch 11, außerdem umfassend:
eine Echtzeit-Anrufrechnungs-Erstellungsvorrichtung, angeordnet zum Erstellen einer Anrufrechnung für den Anruf, wenn die Echtzeit-Anrufrechnungs-Erstellungsvorrichtung vom BOSS Anrufdauerinformation und Vergebührungsinformation im Anruf empfängt;
worin das BOSS außerdem dazu konfiguriert ist, Anrufdauerinformation und Vergebührungsinformation an die Echtzeit-Anrufrechnungs-Erstellungsvorrichtung zu senden, wenn der Anruf abgebaut wird (414).

13. System nach Anspruch 12, worin die Echtzeit-Anrufrechnungs-Erstellungsvorrichtung im BOSS angeordnet ist.

14. Dienstesteuerungspunkt, SCP, umfassend:
eine Echtzeit-Steuerungseinheit, angeordnet zum Empfangen von Anrufinformation von einem Vermittlungssystem,
**dadurch gekennzeichnet, dass**
die Echtzeit-Anrufsteuerungseinheit angeordnet ist zum Senden einer einen Teilnehmeridentifikator eines Anrufs tragenden Authentifizierungsanforderung an ein Geschäftsbetrieb-Unterstützungssystem (BOSS) (401, 402), zum Empfangen eines vom BOSS gesendeten Authentifizierungsergebnisses und zum Steuern des Anrufs gemäß dem Authentifizierungsergebnis (403); und
eine Echtzeit-Wechselwirkungseinheit angeordnet ist zum Weiterleiten der Authentifizierungsanforderung und des Authentifizierungsergebnisses zwischen dem BOSS und der Echtzeit-Anrufsteuerungseinheit (404),
worin die Echtzeit-Anrufsteuerungseinheit dazu angeordnet ist, zu bestimmen, ob das Authentifizierungsergebnis eine erfolgreiche Authentifizierungsnachricht oder eine erfolglose Authentifizierungsnachricht ist (405),
worin die Echtzeit-Anrufsteuerungseinheit dazu konfiguriert ist, einen Anrufverbindungsprozess auszuführen, falls das Authentifizierungsergebnis die erfolgreiche Authentifizierungsnachricht ist (407),
und
worin die Echtzeit-Anrufsteuerungseinheit in dem SCP dazu konfiguriert ist, den Anruf zu verweigern und das Verfahren zu beenden, falls das Authentifizierungsergebnis die erfolglose Authentifizierungsnachricht ist (406).

15. Geschäftsbetrieb-Unterstützungssystem, BOSS, umfassend:
eine Einheit, angeordnet zum Speichern der Teilnehmerinformation;
**dadurch gekennzeichnet, dass** sie außerdem Folgendes umfasst:
eine Einheit, angeordnet zum Empfangen einer Authentifizierungsanforderung, die einen von einem Dienstesteuerungspunkt, SCP, gesendeten Teilnehmeridentifikator eines Anrufs trägt;
eine Authentifizierungs- und Vergebührungseinheit, angeordnet zum Ausführen einer Authentifizierung an dem Anruf gemäß dem in der Authentifizierungsanforderung getragenen Teilnehmeridentifikator des Anrufs und gespeicherter Teilnehmerinformation (403); und
eine Einheit, angeordnet zum Senden eines Authentifizierungsergebnisses an den SCP,
worin die Authentifizierungs- und Vergebührungseinheit dazu angeordnet ist, nach der Teilnehmerinformation gemäß dem Teilnehmeridentifikator zu suchen und zu bestimmen, ob einem Teilnehmer gemäß der Teilnehmerinformation erlaubt ist, den Anruf zu beginnen (501);
worin die Authentifizierungs- und Vergebührungseinheit dazu konfiguriert ist, eine erfolgreiche Authentifizierungsnachricht als das Authentifizierungsergebnis an eine Echtzeit-Wechselwirkungseinheit im SCP zu senden, falls dem Teilnehmer erlaubt ist, den Anruf zu beginnen (505), und
worin die Authentifizierungs- und Vergebührungseinheit dazu konfiguriert ist, eine erfolglose Authentifizierungsnachricht als das Authentifizierungsergebnis an die Echtzeit-Wechselwirkungseinheit im SCP zu senden, falls dem Teilnehmer nicht erlaubt ist, den Anruf zu beginnen (506).

16. BOSS nach Anspruch 15, außerdem umfassend:
eine Echtzeit-Anrufrechnungs-Erstellungseinheit, angeordnet zum Erstellen einer Anrufrechnung für den Anruf, wenn die Echtzeit-Anrufrechnungs-Erstellungseinheit von der Authentifizierungs- und Vergebührungseinheit Anrufdauerinformation und Vergebührungsinformation im Anruf empfängt;
worin die Authentifizierungs- und Vergebührungseinbeit außerdem dazu konfiguriert ist, die Anrufdauerinformation und Vergebührungsinformation beim Abbau des Anrufs an die Echtzeit-Anrufrechnungs-Erstellungseinheit zu senden (414).

## Revendications

1. Procédé de commande d'appel, comprenant les étapes ci-dessous consistant à :
suite à la réception d'un appel en provenance d'un système de commutation, transmettre, par le biais d'un point de commande de services, SCP, une demande d'authentification contenant un identifiant d'abonné de l'appel à un système de prise en charge d'opérations commerciales, BOSS (401, 402) ;
commander l'appel, par le biais du point SCP, selon un résultat d'authentification,
suite à la réception du résultat d'authentification du système BOSS authentifiant un abonné de l'appel en fonction de l'identifiant d'abonné de l'appel transporté dans la demande d'authentification et dans les informations d'abonné stockées (403-414) ;
dans lequel l'étape consistant à commander l'appel, par le biais du point SCP, selon le résultat d'authentification, suite à la réception du résultat d'authentification du système BOSS authentifiant un abonné de l'appel en fonction de l'identifiant d'abonné de l'appel transporté dans la demande d'authentification et dans les informations d'abonné stockées, comporte les étapes ci-dessous consistant à :
rechercher, par le biais du système BOSS, les informations d'abonné en fonction de l'identifiant d'abonné, et déterminer si un abonné est autorisé à procéder à l'appel en fonction des informations d'abonné (501) ;
si l'abonné est autorisé à procéder à l'appel, envoyer, par le biais du système BOSS,
un message de réussite d'authentification en qualité de premier résultat d'authentification, au point SCP, et mettre en oeuvre, par le biais du point SCP, un traitement de connexion d'appel suite à la réception du premier résultat d'authentification (505) ;
si l'abonné n'est pas autorisé à procéder à l'appel, envoyer, par le biais du système BOSS, un message d'échec d'authentification en qualité de second résultat d'authentification, au point SCP, et rejeter l'appel, par le biais du point SCP suite à la réception du second résultat d'authentification (506).

2. Procédé selon la revendication 1, dans lequel :
l'abonné est un abonné post-payé ;
l'étape consistant à déterminer, par le biais du système BOSS, si un abonné est autorisé à procéder à l'appel en fonction des informations d'abonné, comporte l'étape ci-dessous consistant à :
déterminer, par le biais du système BOSS, si l'abonné est autorisé à procéder à l'appel en fonction des données de paiement de l'abonné contenues dans les informations d'abonné (504).

3. Procédé selon la revendication 1, dans lequel :
l'abonné est un abonné prépayé ;
le procédé comportant en outre l'étape ci-dessous consistant à :
stocker des informations d'abonnés prépayés, comportant l'identifiant d'abonné et le solde des abonnés, dans le système BOSS ;
l'étape consistant à déterminer, par le biais du système BOSS, si l'abonné est autorisé à procéder à rappel en fonction des informations d'abonné, comporte l'étape ci-après consistant à :
déterminer, par le biais du système BOSS, si l'abonné est autorisé à procéder à l'appel en fonction du solde inclus dans les informations d'abonné (503).

4. Procédé selon la revendication 1, comprenant en outre l'étape ci-dessous consistant à :
avant l'envoi, par le système BOSS, du premier résultat d'authentification au point SCP, générer, par le biais du système BOSS, une durée d'appel autorisée en fonction des informations d'abonné, et transporter la durée d'appel autorisée dans le premier résultat d'authentification (413).

5. Procédé selon la revendication 4, comprenant en outre les étapes ci-dessous consistant à :
envoyer, par le biais du point SCP, la durée de l'appel, au système BOSS, lorsqu'il a été vérifié qu'une durée de l'appel atteint la durée d'appel autorisée (414) ;
calculer, par le biais du système BOSS, les frais en fonction de la durée de l'appel ;
déterminer, par le biais du système BOSS, si l'abonné est autorisé à poursuivre l'appel en fonction des frais (503) ;
si l'abonné est autorisé à poursuivre l'appel, générer, par le biais du système BOSS, une durée d'appel actuellement autorisée et envoyer la durée d'appel actuellement autorisée au point SCP, et surveiller la durée de l'appel par le biais du point SCP (505) ;
si l'abonné n'est pas autorisé à poursuivre la communication, envoyer, par le biais du système BOSS, une instruction de libération d'appel, au point SCP, envoyer l'instruction de libération d'appel au système de commutation, par le biais du point SCP, et libérer l'appel (506).

6. Procédé selon la revendication 5, dans lequel :
l'abonné est un abonné post-payé ;
l'étape consistant à déterminer, par le biais du système BOSS, si l'abonné est autorisé à poursuivre l'appel en fonction des frais, comporte l'étape ci-dessous consistant à :
déterminer, par le biais du système BOSS, si l'abonné est autorisé à poursuivre l'appel en fonction des données de paiement de l'abonné et des frais (504).

7. Procédé selon la revendication 5, dans lequel :
l'abonné est un abonné prépayé ;
la methode consistant à déterminer, par le biais du système BOSS, si l'abonné est autorisé à poursuivre l'appel en fonction des frais, comporte l'étape ci-dessous consistant à :
acquérir, par le biais du système BOSS, le solde de l'abonné en fonction des frais, et déterminer si l'abonné est autorisé à poursuivre l'appel en fonction du solde de l'abonné (503).

8. Procédé selon la revendication 5, comprenant en outre l'étape ci-dessous consistant à :
lors de la libération de l'appel, générer, par le biais du système BOSS, une facture de l'appel en fonction des informations de durée et des informations de facturation de l'appel.

9. Procédé selon la revendication 1, dans lequel le protocole de communication de dernière couche pour une interaction entre le point SCP et le système BOSS est le protocole TCP/IP (protocole de commande de transmission / protocole Internet).

10. Procédé selon la revendication 1, dans lequel le protocole de couche application pour une interaction entre le point SCP et le système BOSS est un protocole défini par l'utilisateur ou un protocole d'application existant.

11. Système de commande d'appel, comprenant un point de commande de services, SCP, **caractérisé en ce que**
le point SCP est agencé de manière à recevoir un appel en provenance d'un système de commutation et envoyer une demande d'authentification contenant un identifiant d'abonné de l'appel (401, 402), et recevoir un résultat d'authentification et commander l'appel en fonction du résultat d'authentification ; et
un système de prise en charge d'opérations commerciales, BOSS, est agencé de manière à recevoir la demande d'authentification du point SCP, authentifier un abonné de l'appel en fonction d'un identifiant d'abonné de l'appel transporté dans la demande d'authentification et dans les informations d'abonné stockées, et envoyer le résultat d'authentification au point SCP (403),
dans lequel le système BOSS est agencé de manière à rechercher les informations d'abonné en fonction de l'identifiant d'abonné, et déterminer si l'abonné est autorisé à procéder à l'appel en fonction des informations d'abonné (501),
dans lequel le système BOSS est conçu pour envoyer un message de réussite d'authentification en qualité de premier résultat d'authentification, au point SCP, dans le cas où l'abonné est autorisé à procéder à l'appel, et le point SCP est conçu pour mettre en oeuvre un traitement de connexion d'appel suite à la réception du premier résultat d'authentification (505) dans le cas où l'abonné est autorisé à procéder à l'appel, et
dans lequel le système BOSS est conçu pour envoyer un message d'échec d'authentification en qualité de deuxième résultat d'authentification, au point SCP, dans le cas où l'abonné n'est pas autorisé à procéder à l'appel, et le point SCP est conçu pour rejeter l'appel suite à la réception du deuxième résultat d'authentification dans le cas où l'abonné n'est pas autorisé à procéder à l'appel (506).

12. Système selon la revendication 11, comprenant en outre :
un dispositif de génération de facture d'appel en temps réel, agencé de manière à créer une facture d'appel de l'appel suite à la réception en provenance du système BOSS des informations de durée d'appel et des informations de facturation dans l'appel ;
dans lequel le système BOSS est en outre configuré de manière à envoyer des informations de durée d'appel et des informations de facturation au dispositif de génération de facture d'appel en temps réel lors de la libération de l'appel (414).

13. Système selon la revendication 12, dans lequel le dispositif de génération de facture d'appel en temps réel est situé dans le système BOSS.

14. Point de commande de services, SCP, comprenant :
une unité de commande d'appel en temps réel agencée de manière à recevoir des informations d'appel en provenance d'un système de commutation,
**caractérisé en ce que**
l'unité de commande d'appel en temps réel est agencée de manière à envoyer une demande d'authentification transportant un identifiant d'abonné d'un appel à un système de prise en charge d'opérations commerciales (BOSS) (401, 402), recevoir un résultat d'authentification envoyé par le biais du système BOSS et commander l'appel selon le résultat d'authentification (403) ; et
une unité d'interaction en temps réel est agencée de manière à transmettre la demande d'authentification et le résultat d'authentification entre le système BOSS et l'unité de commande d'appel en temps réel (404),
dans lequel l'unité de commande d'appel en temps réel est agencée de manière à déterminer si le résultat d'authentification est un message de réussite d'authentification ou un message d'échec d'authentification (405),
dans lequel l'unité de commande d'appel en temps réel est conçue pour mettre en oeuvre un traitement de connexion d'appel dans le cas où le résultat d'authentification est le message de réussite d'authentification (407), et
dans lequel l'unité de commande d'appel en temps réel, dans le point SCP, est conçue pour rejeter l'appel et pour mettre fin à la procédure dans le cas où le résultat d'authentification est le message d'échec d'authentification (406).

15. Système de prise en charge d'opérations commerciales, BOSS, comprenant :
une unité agencée de manière à stocker les informations d'abonné,
**caractérisé en ce qu'**il comporte en outre
une unité agencée de manière à recevoir une demande d'authentification transportant un identifiant d'abonné d'un appel, envoyée par un point de commande de services, SCP ;
une unité d'authentification et de facturation, agencée de manière à mettre en oeuvre une authentification de l'appel en fonction de l'identifiant d'abonné de l'appel transporté dans la demande d'authentification et dans les informations d'abonné stockées (403) ; et
une unité agencée de manière à envoyer un résultat d'authentification au point SCP,
dans lequel l'unité d'authentification et de facturation est agencée de manière à rechercher les informations d'abonné en fonction de l'identifiant d'abonné, et déterminer si un abonné est autorisé à procéder à l'appel en fonction des informations d'abonné (501),
dans lequel l'unité d'authentification et de facturation est conçue pour envoyer un message de réussite d'authentification en qualité de résultat d'authentification, à une unité d'interaction en temps réel dans le point SCP, dans le cas où l'abonné est autorisé à procéder à l'appel (505), et
dans lequel l'unité d'authentification et de facturation est conçue pour envoyer un message d'échec d'authentification en qualité de résultat d'authentification, à l'unité d'interaction en temps réel dans le point SCP, dans le cas où l'abonné n'est pas autorisé à procéder à l'appel (506).

16. Système BOSS selon la revendication 15, comprenant en outre :
une unité de génération de facture d'appel en temps réel, agencée de manière à créer une facture d'appel de l'appel suite à la réception en provenance de l'unité d'authentification et de facturation des informations de durée d'appel et des informations de facturation dans l'appel ;
dans lequel l'unité d'authentification et de facturation est en outre configurée de manière à envoyer les informations de durée d'appel et les informations de facturation à l'unité de génération de facture d'appel en temps réel lors de la libération de l'appel (414).
